# FASCICULE DE BREVET EUROPEEN

(11) **EP 1 126 196 B1**
(45) Date de publication et mention de la délivrance du brevet: **12.11.2003**
(21) Numéro de dépôt: 01400302.4
(22) Date de dépôt: 07.02.2001
(51) Int. Cl.: F16H 57/02

(54) **Carter de boîte de vitesses manuelle pour véhicule automobile**
Gehäuse für ein Fahrzeugschaltgetriebe
Housing for a manual automotive gearbox

(30) Priorité: 10.02.2000 FR 0001635
(43) Date de publication de la demande: 22.08.2001
(73) Titulaire: Peugeot Citroen Automobiles SA, 92200 Neuilly sur Seine (FR)
(72) Inventeur: Bertolino, Walter, 78780 Maurecourt (FR)
(74) Mandataire: Thinat, Michel

(56) Documents cités:
- DE-A- 2 529 248
- FR-A- 2 492 033
- GB-A- 974 944

## Description

La présente invention concerne un carter de boîte de vitesses manuelle pour véhicule automobile selon le préambule de la revendication 1 et comme connu du document FR 2 492 033.

Dans l'architecture actuelle d'une boîte de vitesses manuelle, la marche arrière est située au fond du carter de boîte de vitesses et la présence du pignon intermédiaire de marche arrière oblige souvent à avoir un carter volumineux en extrémité pour pouvoir envelopper ce pignon intermédiaire.

La présente invention propose de remédier à l'inconvénient ci-dessus.

A cet effet, selon l'invention, le carter de boîte de vitesses manuelle pour véhicule automobile comprenant une partie de logement du pignon intermédiaire de marche arrière, est caractérisé en ce qu'il comprend un couvercle de fermeture de la partie du carter de logement du pignon intermédiaire qui est fixé amoviblement à cette partie par une agrafe dont les extrémités s'engagent respectivement dans deux trous borgnes de la partie du carter.

Le couvercle de fermeture est fixé à la partie du carter par l'intermédiaire d'un joint d'étanchéité en appui sur le bord périphérique de l'ouverture du logement du pignon intermédiaire qui fait en partie saillie à travers cette ouverture dans le couvercle.de fermeture.

Le couvercle de fermeture est de forme générale rectangulaire et a sa paroi de fermeture bombée vers l'extérieur et l'agrafe de fixation est une tige métallique en forme de U à base allongée en appui sur la face externe bombée de la paroi du couvercle longitudinalement à celle-ci et dont les branches ont leurs extrémités libres recourbées sensiblement à angle droit s'engageant dans les deux trous borgnes de la partie du carter.

La face externe bombée de la paroi du couvercle de fermeture comporte une échancrure de réception de la portion centrale de la base allongée de la tige métallique.

Le pignon intermédiaire est monté fou sur un axe de support fixé dans la partie du carter, logé à ses extrémités respectivement dans deux alésages de la partie du carter et retenu dans ceux-ci par un bouchon de fermeture de l'un des deux alésages et accessible de l'extérieur pour permettre le montage et le démontage de l'axe de support du pignon fou.

Le pignon intermédiaire est monté sur l'axe de support par l'intermédiaire d'un palier lisse et d'une douille à aiguilles et des rondelles de friction sont montées sur l'axe de support de part et d'autre du pignon intermédiaire.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en coupe partielle du carter de boîte de vitesses d'un véhicule automobile et dans une partie duquel est logé le pignon intermédiaire de marche arrière ;
- la figure 2 2 est une vue en perspective éclatée représentant les différents composants de montage du pignon intermédiaire de marche arrière dans la partie du carter de boîte de vitesses ;
- la figure 3 est une vue en perspective semblable à celle de la figure 2 et représentant le pignon intermédiaire de marche arrière en position montée dans la partie du carter ;
- la figure 4 est une vue en perspective de côté suivant la flèche IV de la figure 3 ; et
- la figure 5 est une vue en coupe suivant la ligne V-V de la figure 1.

En se reportant aux figures, la référence 1 désigne un carter d'une boîte de vitesses manuelle pour véhicule automobile et dont seule la partie de logement du pignon intermédiaire de marche arrière 2 et située au fond du carter 1, est représentée.

Le pignon intermédiaire 2 est en engrènement avec un pignon récepteur de marche arrière 3 et l'arbre primaire AP comme représenté en figure 5 et est monté à rotation sur un axe de support 4 fixé dans la partie du carter la servant de logement au pignon intermédiaire 2.

Selon l'invention, on prévoit un couvercle externe 5 de fermeture de la partie du carter de logement la du pignon intermédiaire 2 et qui est amoviblement fixé à la partie la par une agrafe élastique 6, dont les extrémités s'engagent respectivement dans deux trous borgnes opposés et alignés 7 de la partie du carter 1a.

Plus précisément, le couvercle de fermeture 5 est de forme générale rectangulaire et a sa paroi de fermeture 5a qui est bombée vers l'extérieur, notamment dans sa partie centrale. L'agrafe de fixation 6 est constituée par une tige métallique en forme de U à base 6a allongée et en appui sur la face externe bombée de la partie centrale de la paroi 5a du couvercle 5 en s'étendant longitudinalement à cette paroi. Les branches 6b de la tige en forme de U ont leurs extrémités libres 6c recourbées sensiblement à angle droit s'engageant dans les deux trous borgnes 7. La face externe bombée de la partie centrale de la paroi 5a du couvercle 5 comporte une échancrure 5b s'étendant longitudinalement au couvercle 5 et destinée à recevoir la portion centrale de la base allongée 6a de la tige 6 en forme de U.

Le couvercle 5 comporte un rebord périphérique 5c de forme s'emboîtant dans une forme conjuguée périphérique d'un joint d'étanchéité 8 en un matériau à base de caoutchouc de forme générale rectangulaire et venant en appui sur le bord plan périphérique 1c délimitant l'ouverture du logement du pignon intermédiaire 2 qui fait saillie en partie à travers cette ouverture, une ouverture rectangulaire 8a du joint d'étanchéité 8 et dans la partie creuse interne du couvercle 5. Ainsi, en position de fermeture du couvercle 5, le joint d'étanchéité est plaqué entre le couvercle 5 et le bord périphérique 1c de la partie de carter la par la force élastique de maintien exercée par l'agrafe de fixation 6.

Le pignon intermédiaire 2 est monté fou sur l'axe 4 qui a ses deux extrémités fixées respectivement dans deux alésages coaxiaux 9 usinés dans la partie du carter la, l'une des extrémités de l'axe 4 étant en appui au fond de l'alésage correspondant 9 tandis que l'autre extrémité de cet axe est retenue dans l'autre alésage 9 par un bouchon 10 fixé à l'entrée de l'alésage 9 et accessible de l'extérieur pour permettre un démontage éventuel de l'axe de support 4.

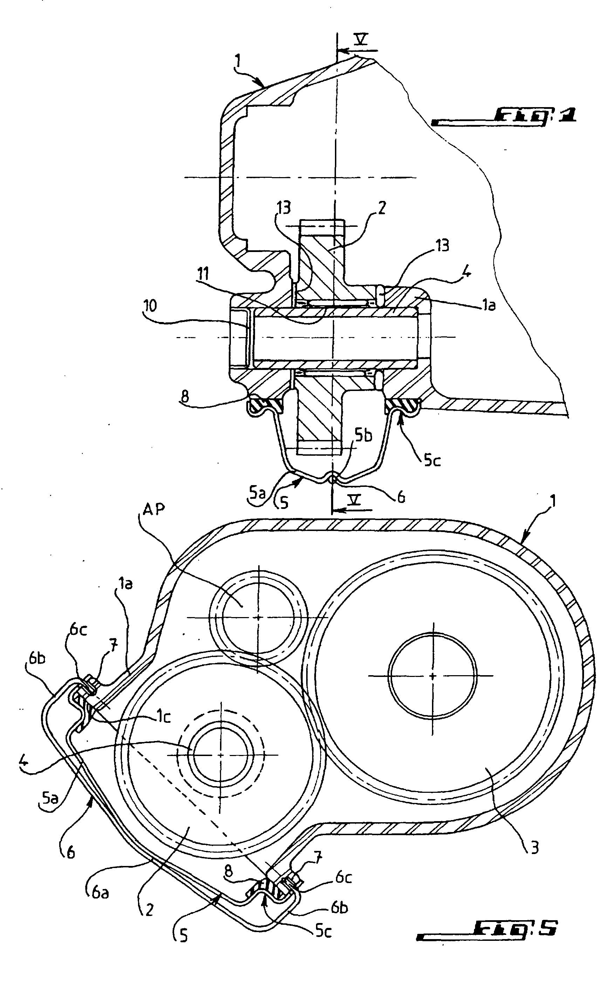

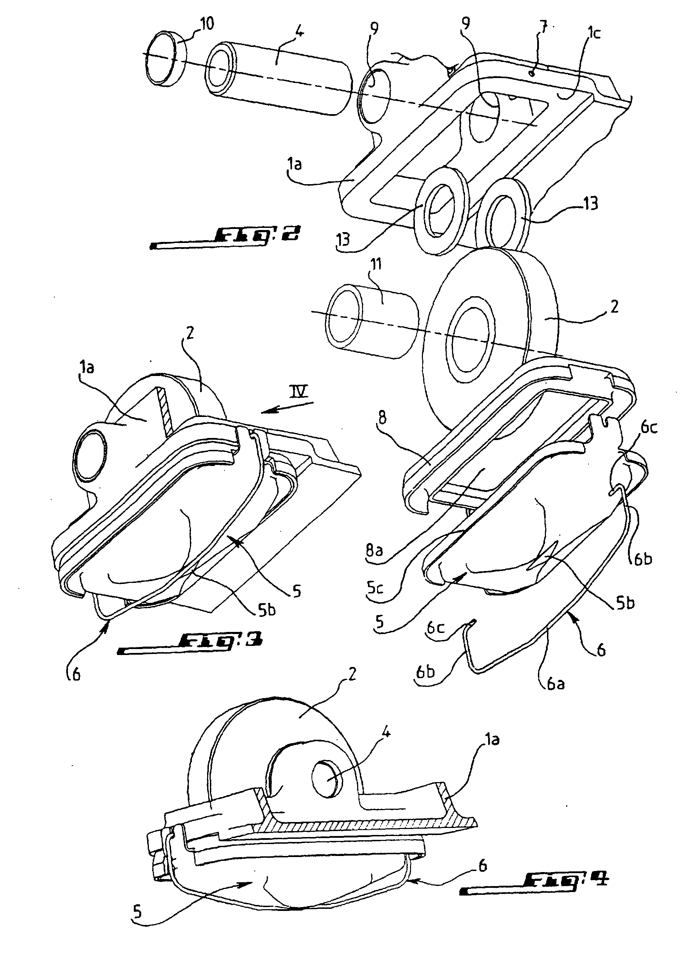

Le pignon intermédiaire 2 est monté à rotation sur l'axe de support 4 par l'intermédiaire d'un palier lisse. tubulaire 11 ou d'une douille à aiguilles et deux rondelles de friction 13 sont montées sur l'axe 4 de part et d'autre du pignon intermédiaire 2. A la place de l'une et/ou l'autre des rondelles de friction 13, il est possible de prévoir une butée à aiguilles comme représenté en figure 1 en partie droite de celle-ci.

L'agencement ci-dessus décrit de l'invention permet d'obtenir un carter de boîte de vitesses moins volumineux, donc d'une masse moindre, un montage et un démontage aisés du pignon intermédiaire de marche arrière et un démoulage simple du carter de boîte de vitesses, tout en restant d'une conception extrêmement simple.

## Revendications

1. Carter de boîte de vitesses manuelle pour véhicule automobile, comprenant une partie de logement (1a) du pignon intermédiaire de marche arrière (2), **caractérisé en ce qu'**il comprend un couvercle (5) de fermeture de la partie du carter (1a) du logement du pignon intermédiaire (2) qui est fixé amoviblement à cette partie par une agrafe (6) dont les extrémités (6c) s'engagent respectivement dans deux trous borgnes (7) de la partie du carter (1a).

2. Carter selon la revendication 1, **caractérisé en ce que** le couvercle de fermeture (5) est fixé à la partie du carter (1a) par l'intermédiaire d'un joint d'étanchéité (8) en appui sur le bord périphérique (1c) de l'ouverture du logement du pignon intermédiaire (2) qui fait saillie en partie à travers l'ouverture dans le couvercle de fermeture (5).

3. Carter selon la revendication 1 ou 2, **caractérisé en ce que** le couvercle de fermeture (5) est de forme générale rectangulaire et a sa paroi de fermeture (5a) bombée vers l'extérieur et **en ce que** l'agrafe de fixation (6) est une tige métallique en forme de U à base allongée (6a) en appui sur la face externe bombée de la paroi (5a) du couvercle (5) longitudinalement à celle-ci et dont les branches (6b) ont leurs extrémités libres (6c) recourbées sensiblement à angle droit s'engageant dans les deux trous borgnes (7) de la partie du carter (la).

4. Carter selon la revendication 3, **caractérisé en ce que** la face externe bombée de la paroi (5a) du couvercle de fermeture (5) comporte une échancrure (5b) de réception de la portion centrale de la base allongée (6a) de la tige métallique (6).

5. Carter selon l'une des revendications précédentes, **caractérisé en ce qu'**il est adapté à recevoir le pignon intermédiaire (2) monté fou sur un axe de support (4) fixé dans la partie du carter (1a), logé à ses extrémités respectivement dans deux alésages (9) de la partie du carter (1a) et retenu dans ceux-ci par un bouchon (10) de fermeture de l'un des deux alésages (9) et accessible de l'extérieur pour permettre le démontage de l'axe de support (4) du pignon fou (2).

6. Carter selon la revendication 5, **caractérisé en ce qu'**il est adapté à recevoir le pignon intermédiaire (2) monte sur l'axe de support (4) par l'intermédiaire d'un palier lisse (11) ou d'une douille à aiguilles et des rondelles de friction (13) ou une ou des butées à aiguilles sont montées sur l'axe de support (4) de part et d'autre du pignon intermédiaire (2).

## Patentansprüche

1. Gehäuse für ein Fahrzeugschaltgetriebe, das einen Aufnahmebereich (1a) für das Rückwärtsgang-Zwischenrad (2) enthält,
**dadurch gekennzeichnet,**
**dass** es eine Verschlusskappe (5) für den Gehäusebereich (1a) zur Aufnahme des Zwischenrades (2) aufweist, die an diesem Bereich abnehmbar durch eine Klammer (6) befestigt ist, deren Enden (6c) in zwei entsprechenden Blindlöchern (7) des Gehäusebereichs (1a) in Eingriff kommen.

2. Gehäuse nach Anspruch 1,
**dadurch gekennzeichnet,**
**dass** die Verschlusskappe (5) an dem Gehäusebereich (1a) über eine Dichtung (8) befestigt ist, die auf dem Außenumfangsrand (1c) der Öffnung der Aufnahme des Zwischenrades (2) anliegt, wobei letzteres teilweise durch die Öffnung in die Verschlusskappe (5) ragt.

3. Gehäuse nach einem der Ansprüche 1 oder 2,
**dadurch gekennzeichnet,**
**dass** die Verschlusskappe (5) eine allgemein rechteckige Form hat und ihre Verschlusswand (5a) nach außen gewölbt ist, und dass die Befestigungsklammer (6) ein Metallstab in der Form eines U mit langer Basis (6a) ist, der auf der gewölbten Außenseite der Wand (5a) der Kappe (5) in deren Längsrichtung anliegt, und dessen Schenkel (6b) mit ihren freien Enden (6c), die im wesentlichen im rechten Winkel umgebogen sind, in den zwei Blindlöchem (7) des Gehäusebereichs (1a) in Eingriff kommen.

4. Gehäuse nach Anspruch 3,
**dadurch gekennzeichnet,**
**dass** die gewölbte Außenseite der Wand (5a) der Verschlusskappe (5) eine halbmondförmige Aussparung (5b) zur Aufnahme des zentralen Teils der länglichen Basis (6a) des Metallstabs (6) aufweist.

5. Gehäuse nach einem der vorherigen Ansprüche,
**dadurch gekennzeichnet,**
**dass** es geeignet ist, das Zwischenrad (2) aufzunehmen, das lose auf einer Tragachse (4) sitzt, die in dem Gehäusebereich (1a) angebracht ist, mit ihren Enden in zwei entsprechenden Bohrungen (9) des Gehäusebereichs (1a) sitzt und in diesen durch einen Verschlussstöpsel (10) für eine der beiden Bohrungen (9) festgehalten wird, welcher von außen zugänglich ist, um den Ausbau der Tragachse (4) des losen Zwischenrades (2) zu ermöglichen.

6. Gehäuse nach Anspruch 3,
**dadurch gekennzeichnet,**
**dass** es geeignet ist, das Zwischenrad (2) aufzunehmen, das über ein Gleitlager (11) oder eine Nadelhülse auf einer Tragachse (4) sitzt, wobei Spannscheiben (13) oder ein oder mehrere Nadelanschläge auf der Tragachse (4) beiderseits des Zwischenrades (2) angebracht sind.

## Claims

1. A manual gearbox housing for an automobile vehicle, comprising a housing part (1a) for the reverse idler transmission gear (2), **characterised in that** it comprises a sealing cover (5) for the housing part (1a) which houses the transmission gear (2), which sealing cover is removably fixed to said part by a clip (6), the ends (6c) of which fit respectively into two blind holes (7) in the housing part (18).

2. A housing according to claim 1, **characterised in that** the sealing cover (5) is fixed to the housing part (1a) via a gasket (8) which bears against the peripheral edge (1c) of the opening in the housing for the transmission gear (2) and which protrudes in part across the opening in the sealing cover (5).

3. A housing according to claim 1 or 2, **characterised in that** the sealing cover (5) is generally rectangular in shape and has its closing wall (5a) bellied towards the outside, and that the fixing clip (6) is a U-shaped metal rod with an elongated base (6a) which bears against the external bellied face of the wall (5a) of the cover (5) longitudinally in relation thereto, and the limbs (6b) of which clip have their free ends (6c) bent back substantially at right angles so that they fit into two blind holes (7) in the housing part (1a).

4. A housing according to claim 3, **characterised in that** the bellied external face of the wall (5a) of the sealing cover (5) comprises an indentation (5b) for receiving the central portion of the elongated base (6a) of the metal rod (6).

5. A housing according to any one of the preceding claims, **characterised in that** it is suitable for receiving the transmission gear (2) which is mounted as an idler gear on a fixed supporting shaft (4) in the housing part (1a), which supporting shaft is mounted at its respective ends in two bores (9) in the housing part (1a) and which is retained therein by a closure plug (10) on one of the two bores (9), which plug is accessible from the outside to enable the supporting shaft (4) for the idler gear (2) to be removed.

6. A housing according to claim 5, **characterised in that** it is suitable for receiving the transmission gear (2) which is mounted on the supporting shaft (4) via a plain bearing (11) and a needle bush, and via friction washers (13) or one or more needle bush stops which are mounted on the supporting shaft (4) on both sides of the transmission gear (2).
